# EUROPEAN PATENT APPLICATION

(11) **EP 4 790 870 A1**
(43) Date of publication of application: **12.08.2026**
(21) Application number: 25200529.3
(22) Date of filing: 05.09.2025
(51) Int. Cl.: H02J 9/06

(54) **UPS AND POWER SUPPLY SYSTEM**

(30) Priority: 06.02.2025 CN 202520187520 U
(71) Applicant: Vertiv Corporation, Westerville, OH 43082 (US)
(72) Inventor: ZHANG, Zhichao, Westerville, 43082 (US); GONG, Ping, Westerville, 43082 (US); CHEN, Tongxin, Westerville, 43082 (US)
(74) Representative: Bryn-Jacobsen, Caelia

(57) **Abstract**

An uninterruptible power supply (UPS) and a power supply system. The UPS includes a first switching module, a rectifier, a second switching module, a direct-current (DC) bus and a controller. A first end of the first switching module is connected to an alternating-current (AC) power supply, and a second end of the first switching module is connected to an input end of the rectifier. Two terminals at a first end of the second switching module are respectively connected to a positive electrode and a negative electrode of a battery pack, two terminals at a second end of the second switching module are respectively connected to the negative electrode and the positive electrode of the battery pack, and a third end of the second switching module is connected to the input end of the rectifier. An output end of the rectifier is connected to a DC bus.

## Description

### FIELD

The present disclosure relates to the technical field of power electronics, and in particular to an uninterruptible power supply (UPS) and a power supply system.

### BACKGROUND

An uninterruptible power supply (UPS) is a core component of a data center and plays a vital role in maintaining the reliability of power supply of the data center. The UPS mainly operates in a grid-powered mode or a battery-powered mode. When the UPS operates in the grid-powered mode, a rectifier and an inverter in the UPS convert electric energy transmitted on the grid into electric energy required by a load. When the UPS operates in the battery-powered mode, a discharger and the inverter in the UPS convert electric energy stored by a battery pack into the electric energy required by the load. At present, to improve the utilization of devices in the UPS, the industry commonly reuses the rectifier required for the UPS to operate in the grid-powered mode as a discharger required for the UPS to operate in the battery-powered mode.

When the rectifier in the UPS is reused as the discharger and the UPS operates in the battery-powered mode, some power devices in the reused rectifier keep operating while others remain idle. The devices that keep operating experience high losses and high temperatures, leading to shortened service life.

### SUMMARY

An uninterruptible power supply (UPS) and a power supply system are provided in the present disclosure, to prolong the service life of devices and reduce the loss of the UPS. Aspects of the present disclosure are set out in the independent claim(s). Other aspects and features of the present disclosure are set out in the claims and the description below.

In a first aspect, a UPS is provided according to an example of the present disclosure. The UPS may be configured to connect to an external alternating-current (AC) power supply or an external battery pack, or may be configured with an internal battery. The UPS may include a first switching module, a rectifier, a second switching module, a direct-current (DC) bus, and a controller.

A first end of the first switching module is configured to connect to an AC power supply, and a second end of the first switching module is configured to connect to an input end of the rectifier. Two terminals at a first end of the second switching module are configured to respectively connect to a positive electrode and a negative electrode of the battery pack, two terminals at a second end of the second switching module are configured to respectively connect to the negative electrode and the positive electrode of the battery pack, and a third end of the second switching module is configured to connect to the input end of the rectifier. An output end of the rectifier is configured to connect to a DC bus. The controller is configured to connect to the second switching module and is configured to control a connection between the first end and a third end of the second switching module, or control a connection between the second end and the third end of the second switching module.

With the above example, the controller may be configured to control a connection between the battery pack and the rectifier through controlling the connection between the first end and the third end of the second switching module or the connection between the second end and the third end of the second switching module. When there is no fault in the AC power supply, the first switching module may be controlled to turn on and the second switching module may be controlled to turn off to use the AC power supply. In a case that the AC power supply fails, the first switching module may be controlled to turn off and the third end of the second switching module may be controlled to alternately connect to the first end and the second end of the second switching module. Due to the opposite polarity of the battery pack connected to the first end and the second end of the second switching module, electric energy from the battery pack passes through different devices in the rectifier, effectively preventing the situation where some devices are idle due to a polarity fault of the battery pack. Furthermore, since the electric energy passes through different devices alternatively, the service life of the devices is significantly prolonged and the loss of the UPS is reduced.

In a possible example, the first switching module includes a first switch corresponding in one-to-one to each phase line of the AC power supply. An electrical connection between the AC power supply and the rectifier may be controlled by controlling to turn on and off the first switch.

In an example, the second switching module includes a first switching circuit and a second switching circuit.

Specifically, a first terminal of the first switching circuit is configured to connect to a positive electrode of a battery pack, a second terminal of the first switching circuit is configured to connect to a negative electrode of the battery pack, and a third terminal of the first switching circuit is configured to connect to an input end of a rectifier. A first terminal of the second switching circuit is configured to connect to the negative electrode of the battery pack, a second terminal of the second switching circuit is configured to connect to the positive electrode of the battery pack, and a third terminal of the second switching circuit is configured to connect to the input end of the rectifier.

The first terminal and the second terminal of the first switching circuit are configured as the first end of the second switching module, the first terminal and the second terminal of the second switching circuit are configured as the second end of the second switching module, and the third terminal of the first switching circuit and the third terminal of the second switching circuit are configured as the third end of the second switching module. With the above example, a polarity of the battery pack connected to the input end of the rectifier may be alternated by controlling to alternately turn on the first switching circuit and the second switching circuit, so that the corresponding current directions of a circuit on the rectifier are alternated accordingly. In this way, the corresponding current flows to different devices in the rectifier, preventing reduction of device service life caused by constant use of fixed devices and reducing device loss.

In a possible example, in a case that the rectifier is an interleaved parallel Power Factor Correction (PFC) circuit, an input end of the interleaved parallel PFC circuit is provided with first terminals and second terminals which respectively one-to-one correspond to each phase line of the AC power supply, each of the first terminals and each of the second terminals are connected to the third end of the second switching module, the first switching circuit comprises second switches corresponding in one-to-one to each of the first terminals and third switches corresponding in one-to-one to each of the second terminals, and the second switching circuit comprises fourth switches corresponding in one-to-one to each of the first terminals and fifth switches corresponding in one-to-one to each of the second terminals.

A first terminal of each of the second switches is configured to connect to a positive electrode of a battery pack, and a second terminal of each of the second switches is configured to connect to a corresponding first terminal. A first terminal of each of the third switches is configured to connect to the negative electrode of the battery pack, and a second terminal of each of the third switches is configured to connect to a corresponding second terminal. A first terminal of each of the fourth switches is configured to connect to the negative electrode of the battery pack, and a second terminal of each of the fourth switches is configured to connect to a corresponding first terminal. A first terminal of each of the fifth switches is configured to connect to the positive electrode of the battery pack, and a second terminal of each of the fifth switches is configured to connect to a corresponding second terminal. With the above example, the interleaved parallel PFC circuit is provided with two bridge arms that operates 180° out of phase for each single phase of a three-phase AC power supply. Accordingly, the interleaved parallel PFC circuit is provided with two terminals to receive each phase of the three-phase AC power supply. The two terminals may be connected to a positive electrode and a negative electrode of the battery pack respectively through the second switch and the third switch, or may be connected to the negative electrode and the positive electrode of the battery pack respectively through the fourth switch and the fifth switch. In this way, the current direction on a circuit in the rectifier in the battery pack-powered mode is controlled.

In a possible example, in a case that the rectifier is a single-phase rectifier or a three-phase rectifier and the second switching module is connected to two terminals at an input end of the rectifier, the first switching circuit includes a second switch and a third switch and the second switching circuit includes a fourth switch and a fifth switch.

A first terminal of the second switch is configured to connect to a positive electrode of a battery pack, and a second terminal of the second switch is configured to connect to the input end of the rectifier. A first terminal of the third switch is configured to connect to a negative electrode of the battery pack, and a second terminal of the third switch is configured to connect to the input end of the rectifier. A first terminal of the fourth switch is configured to connect to the negative electrode of the battery pack, and a second terminal of the fourth switch is configured to connect to the second terminal of the second switch. A first terminal of the fifth switch is configured to connect to the positive electrode of the battery pack, and a second terminal of the fifth switch is configured to connect to the second terminal of the third switch.

In a possible example, in a case that the rectifier is a single-phase rectifier or a three-phase rectifier and the second switching module is connected to two terminals at an input end of the rectifier, the second switching module includes a sixth switch and a seventh switch, wherein the sixth switch and the seventh switch may be implemented by a three-terminal switching device, for example, a single pole double throw switch.

Specifically, a first terminal of the sixth switch is configured to connect to a positive electrode of a battery pack, a second terminal of the sixth switch is configured to connect to a negative electrode of the battery pack, and a third terminal of the sixth switch is configured to connect to one terminal of the two terminals of the rectifier to which the second switching module is connected. A first terminal of the seventh switch is configured to connect to the negative electrode of the battery pack, a second terminal of the seventh switch is configured to connect to the positive electrode of the battery pack, and a third terminal of the seventh switch is configured to connect to the other terminal of the two terminals of the rectifier to which the second switching module is connected.

In a possible example, the controller is configured to: control to alternately connect the third end of the second switching module to the first end and the second end of the second switching module in a case that the AC power supply fails.

In a possible example, the UPS further comprises a charging circuit connected between the battery pack and the DC bus, and the charging circuit is configured to acquire electric energy from the DC bus to charge the battery pack.

In a possible example, the UPS further includes the battery pack.

In a second aspect, a power supply system is provided according to an example of the present disclosure. The power supply system can meet the power supply requirements in a high-power supply scenario. The power supply system includes at least one UPS according to the first aspect of the present disclosure and any one possible example thereof. In a case that the power supply system is applied in a high-power supply scenario, the power supply system may be provided with multiple UPSs connected in parallel. Each of the multiple UPSs receives and processes a part of the power, thereby increasing the power level of the power supply system.

### BRIEF DESCRIPTION OF THE DRAWINGS

To describe the technical solutions in examples of the present disclosure more clearly, a briefly introduction will be given below to the drawings required for describing the examples. Apparently, the drawings in the following description show merely some examples of the present disclosure, and those skilled in the art may obtain other drawings based on these drawings without any creative effort.
FIG. 1 is a schematic structural diagram of a UPS commonly used in the prior art;
FIG. 2 is a schematic structural diagram of another UPS commonly used in the prior art;
FIG. 3 is a schematic structural diagram of another UPS commonly used in the prior art;
FIG. 4 is a schematic structural diagram of another UPS commonly used in the prior art;
FIG. 5 is a schematic structural diagram of a UPS according to an example of the present disclosure;
FIG. 6 is a schematic structural diagram of a first switching module according to an example of the present disclosure;
FIG. 7 is a schematic structural diagram of a first switching module according to another example of the present disclosure;
FIG. 8 is a schematic structural diagram of a first switching module according to another example of the present disclosure;
FIG. 9 is a schematic structural diagram of a second switching module according to an example of the present disclosure;
FIG. 10 is a schematic structural diagram of a second switching module according to another example of the present disclosure;
FIG. 11 is a schematic structural diagram of a second switching module according to another example of the present disclosure;
FIG. 12 is a schematic structural diagram of a second switching module according to another example of the present disclosure; and
FIG. 13 is a schematic structural diagram of a UPS according to another example of the present disclosure.

### DETAILED DESCRIPTION

Examples of the present disclosure are described in detail below in conjunction with the drawings.

The terms used in the examples of the present disclosure are merely for the purpose of explaining the examples of the present disclosure, rather than limiting the present disclosure. Apparently, the described examples are only some rather than all of the examples of the present disclosure. All the other examples obtained by those skilled in the art based on the examples in the present disclosure without any creative work fall in the scope of protection of the present disclosure.

In the following, some terms used in the examples of the present disclosure are explained, so as to facilitate the understanding by those skilled in the art.
1. The term "multiple" in the examples of the present disclosure refers to two or more, and the same applies to other quantifiers.
2. The controllable switching device in the examples of the present disclosure refers to a device in which switching on or off of a switch can be controlled by an electrical signal. For example, the controllable switching device may be one or more of various types of switching devices such as a relay, a metal oxide semiconductor field effect transistor (MOSFET), a bipolar junction transistor (BJT), an insulated gate bipolar transistor (IGBT), a silicon carbide (SiC) transistor, a silicon-controlled rectifier (SCR), which are not listed one by one in the examples of the present disclosure. The switching transistors may be packaged separately or together, which is not limited in the examples of the present disclosure. Each switching transistor may include a first terminal, a second terminal and a control terminal. The control terminal is configured to control to switch on or off the switching transistors. When the switching transistor is switched on, current can be transmitted between the first terminal and the second terminal of the switching transistor. When the switching transistor is switched off, current cannot be transmitted between the first terminal and the second terminal of the switching transistor. Taking MOSFET as an example, the control terminal is the gate, the first terminal is the source, and the second terminal is the drain. Alternatively, the first terminal may be the drain, and the second terminal may be the source.

Technical solutions of examples of the present disclosure are clearly and completely described hereinafter in conjunction with the drawings of the examples of the present disclosure. The technical solutions according to the examples of the present disclosure are applied to devices that need to be powered on for a period of time when the power supply is disconnected. For example, an uninterruptible power supply (UPS) is generally configured in a data center in order to prevent the loss of important data when the data center experiences a sudden power outage. The UPS supplies power when the power grid or other power supplies fail and the data center is capable of storing important data during the UPS power supply.

In practical applications, to reduce the size of a UPS, the industry commonly adopts a solution in which a rectifier is reused as a discharger in a battery pack. In this way, no discharger is required to be separately configured for the battery pack, thereby lowering the device costs of the UPS and reducing the size of the UPS.

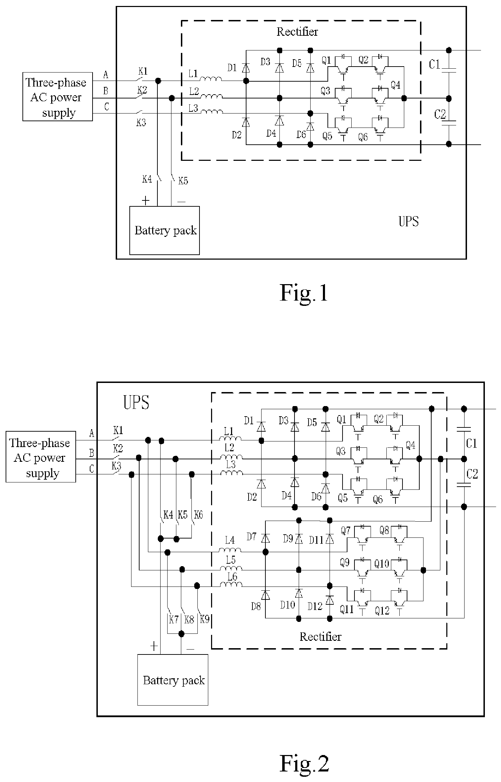

Reference is made to FIG. 1, which is a schematic structural diagram of a UPS in which a rectifier is reused as a discharger of a battery pack. As shown in FIG. 1, an input end of the rectifier may be configured to connect to a three-phase AC power supply through switches K1 to K3 and configured to connect to the battery pack through switches K4 and K5. Three-phase AC current outputted by the three-phase AC power supply may include phase-A AC current, phase-B AC current and phase-C AC current.

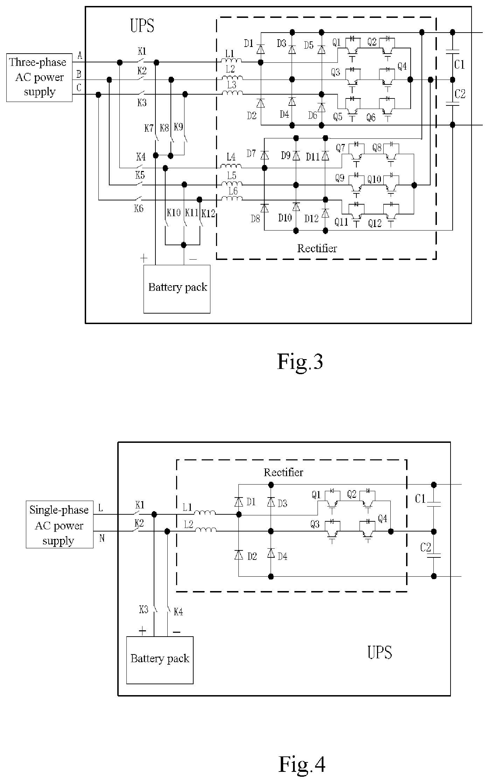

In practical applications, the rectifier in the UPS shown in FIG. 1 adopts a three-phase Vienna Power Factor Correction (PFC) circuit topology commonly used in the industry. The rectifier may adopt another rectification topology. For example, FIG. 2 and FIG. 3 are two schematic structural diagrams showing rectifiers that adopt interleaved parallel PFC circuits. As shown in FIG. 2 and FIG. 3, each of phase lines that respectively transmit phase-A AC current, phase-B AC current and phase-C AC current is configured with two terminals for receiving electric energy. Switching transistors on a single-phase bridge arms that correspond to the two terminals may operate 180° out of phase during AC power reception, and the two terminals are respectively connected to a positive terminal and a negative terminal of the battery pack through a pair of switches. Of course, the rectifier may adopt another three-phase rectification structural topology commonly used in the industry. In addition, in a case that the power supply in the UPS scenario is a single-phase AC power supply, the rectifier in the UPS may adopt another rectification structural topology. For example, FIG. 4 is a schematic structural diagram of a single-phase rectifier. An input end of the rectifier may be configured to connect to a phase line L transmitting single-phase AC current through a switch K1, the other input end of the rectifier may be configured to connect to a neutral line N through a switch K2, and these input ends of the rectifier may be configured to connect to a battery pack through switches K3 and K4. Of course, the UPS may adopt another single-phase rectification topology commonly used in the industry, which is not detailed in the present disclosure.

It should be noted that the structures of the UPSs shown in FIG. 1 to FIG. 3 are merely examples. In practical applications, the UPS may further include other devices, for example, a circuit breaker connected between the UPS and an external AC power supply and an inverter connected between a DC bus and a load. The inverter may invert electric energy of the DC bus into AC current to supply power to the load. In the structures of the UPSs shown in FIG. 1 to FIG. 3, the DC bus is composed of a bus capacitor C1 and a bus capacitor C2 connected in series. In practice, the DC bus may be composed of a single bus capacitor. Of course, the DC bus may adopt another structure with the above functions in the industry, which is not limited in the present disclosure.

If the structure of the UPS shown in FIG. 2 is adopted, during normal operation of the AC power supply, the switches K1 to K3 may be controlled to turn on and the switches K4 to K9 may be controlled to turn off so that the rectifier receives three-phase AC power outputted by the three-phase AC power supply and performs rectification processing. If the structure of the UPS shown in FIG. 3 is adopted, during normal operation of the AC power supply, the switches K1 to K6 may be controlled to turn on and the switches K7 to K12 may be controlled to turn off so that the rectifier receives three-phase AC power outputted by the three-phase AC power supply and performs rectification processing. If the structure of the UPS shown in FIG. 2 is adopted, in a case that the three-phase AC power supply fails, the switches K1 to K3 may be controlled to turn off and a part of the switches K4 to K9 may be controlled to turn on. At this time, the rectifier receives electric energy from a battery pack and performs a boost operation. If the structure of the UPS shown in FIG. 3 is adopted, the switches K1 to K6 may be controlled to turn off and the switches K7 to K12 may be controlled to turn on.

In practice, a power supply process of a battery pack may include an energy storage stage and a power supply stage. Taking phase-AAC current as an example, if the rectifier shown in FIG. 2 is adopted, in the energy storage stage, electric energy of the battery pack may be transmitted from a positive electrode, sequentially through the switch K4, an inductor L1, a switching transistor Q1, a switching transistor Q2, a switching transistor Q12, a switching transistor Q11, an inductor L6 and the switch K9, and back to a negative electrode of the battery pack. The battery pack stores energy for the inductors L1 and L6. In the power supply stage, the electric energy of the battery pack may be transmitted from the positive electrode, sequentially through the switch K4, the inductor L1, a diode D1, a bus capacitor C1, a bus capacitor C2, a diode D12, the inductor L6 and the switch K9, and back to the negative electrode of the battery pack. If the structure of the rectifier shown in FIG. 3 is adopted, in the energy storage stage, electric energy of the battery pack may be transmitted from the positive electrode, sequentially through the switch K7, the inductor L1, the switching transistor Q1, the switching transistor Q2, a switching transistor Q8, a switching transistor Q7, an inductor L4 and the switch K10, and back to the negative electrode of the battery pack. The battery pack stores energy for the inductors L1 and L4. In the power supply stage, the electric energy of the battery pack may be transmitted from the positive electrode, sequentially through the switching transistor K7, the inductor L1, the diode D1, the bus capacitor C1, the bus capacitor C2, a diode D8, the inductor L4 and the switch K10, and back to the negative electrode of the battery pack.

It should be noted that, if the structure of the rectifier shown in FIG. 2 is adopted, when the switches K4 to K9 are all turned on, the electric energy of the battery pack passes through a circuit formed by the switches which have been turned on, resulting in a short-circuit. Thus, in the battery pack-powered stage, only two switches can be turned on, and the two switches are connected to different phase lines.

Combined with the above description, it can be seen that although the rectifier is reused during the battery pack-powered stage, if the rectifier shown in FIG. 2 is adopted in the power supply stage, the diodes D1 and D12 keep operating while the diodes D2 and D11 remain idle. If the rectifier shown in FIG. 3 is adopted, the diodes D1 and D8 in the rectifier keep operating while the diodes D2 and D7 remain idle. Therefore, the service life of the diodes D1 and D8 and the service life of the diodes D1 and D12 are reduced, the loss of the UPS is increased.

In view of this, a UPS and a power supply system are provided according to the present disclosure for prolonging the service life of devices and reducing the loss of the UPS.

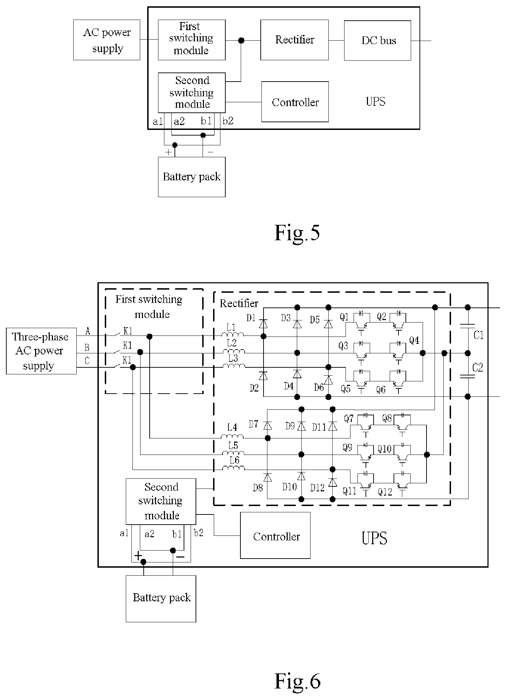

Reference is made to FIG. 5, which is schematic structural diagram of a UPS according to an example of the present disclosure. As shown in FIG. 5, the UPS may include a first switching module, a rectifier, a second switching module, a DC bus, and a controller.

A first end of the first switching module is configured to connect to an AC power supply, and a second end of the first switching module is configured to connect to an input end of the rectifier. A first end of the second switching module is provided with two terminals a1 and a2. The terminal a1 is configured to connect to a positive electrode of a battery pack and the terminal a2 is configured to connect to a negative electrode of the battery pack. A second end of the second switching module is provided with two terminals b1 and b2. The terminal b1 is configured to connect to the negative electrode of the battery pack and the terminal b2 is configured to connect to the positive electrode of the battery pack. A third end of the second switching module is connected to the input end of the rectifier. An output end of the rectifier is connected to the DC bus. The controller is configured to connect to the second switching module and is configured to control a connection between the first end and the third end of the second switching module, or control a connection between the second end and the third end of the second switching module.

In practical applications, the above-described controller may further control the operation of other devices in the UPS, for example, to control turning on and off of switching devices in the first switching module and the rectifier. The UPS may be further configured with other control devices to control turning on and off of the switching devices in the first switching module and the rectifier.

The numbers of terminals for the input end of the rectifier, the input end of the first switching module, and the output end of the first switching module may be set based on the type of an external AC power supply. For example, in a case that an external three-phase AC power supply is connected to the UPS and the three-phase AC power supply adopts three-phase three-wire transmission, the numbers of the terminals for the input end of the rectifier, the input end of the first switching module, and the output end of the first switching module may be three. In a case that an external single-phase AC power supply is connected to the UPS, the numbers of the terminals for the input end of the rectifier, the input end of the first switching module, and the output end of the first switching module may be two.

It should be understood that the UPS shown in FIG. 5 is only one example. The UPS may be provided with more or fewer components than shown in FIG. 5. For example, a rear end of a DC bus composed of the bus capacitors C1 and C2 within the UPS may be connected to an inverter, and the inverter may be externally connected to a load to provide power for the connected load. The inverter may be implemented by a circuit topology with inverter functions commonly used in the industry, which is not detailed in the present disclosure. The DC bus may be composed of the bus capacitors C1 and C2 connected in series or be composed of only a single bus capacitor. Of course, other commonly used devices in the industry can also be selected for the bus capacitor, which is not detailed in the present disclosure.

The AC power supply may be a grid or another power supplies. The grid may be, but is not limited to: a utility grid, a micro grid, a household grid, and an industrial grid. The power supply may be, but is not limited to: a new energy power generation system and a diesel generator.

Referring to FIG. 5, an external AC power supply may be connected to the input end of the rectifier through the first switching module, and an external battery pack or an internally configured battery pack may be connected to the input end of the rectifier through the second switching module. During normal operation of the AC power supply, the first switching module may be controlled to turn on to establish an electrical connection between the AC power supply and the rectifier. Thus, the rectifier receives AC current from the AC power supply, rectifies the AC current into DC current, and then supplies power to the DC bus. In a case that the AC power supply fails, a connection between the third end and the first end and a connection between the third end and the second end of the second switching module may be controlled alternately. Due to the opposite polarity of the battery pack connected to the two terminals a1 and a2 of the first end and the two terminals b1 and b2 of the second end of the second switching module, when the third end of the second switching module is controlled to respectively connect to the first end and the second end of the second switching module, the direction of power transmission on the line is reversed. In this way, different diodes in the rectifier can be turned on, thereby prolonging the service life of the devices. In addition, since in the battery pack-powered stage, the electric energy passes through different devices at different times, effectively solving the problem of reduced service life of some devices and reducing the device losses of the UPS.

In practical applications, both a first switching module and a second switching module include multiple switching devices. The switching devices may be controllable switching devices to switch the power supply for a rectifier, so as to be powered by an AC power supply when the AC power supply is normal and to switch the power supply of the rectifier to the battery pack when the AC power supply fails, thereby ensuring the power supply stability of a UPS. Control terminals of the above-described switching devices are connected to a controller. The controller may control turning on and off of the switching devices by sending corresponding level signals.

The structure of a rectifier may refer to the rectifier topologies shown in FIG. 1 to FIG. 4 or adopt other circuit topologies with rectification functions used in the industry. Detailed descriptions of an AC power supply-powered process and a battery pack-powered process are provided below by taking the rectification topologies shown in FIG. 2 to FIG. 4 as examples in conjunction with the structures of the first switching module and the second switching module.

### 1. First switching module

A first end of a first switching module is configured to connect to an external AC power supply, and a second end of the first switching module is connected to an input end of a rectifier. The first switching module can control connection and disconnection between the AC power supply and the rectifier. When the AC power supply is normal, the first switching module is turned on to electrically connect the AC power supply to the rectifier to supply power to a UPS. When the AC power supply fails, the first switching module is turned off to disconnect the AC power supply from the rectifier to prevent the expansion of the fault range.

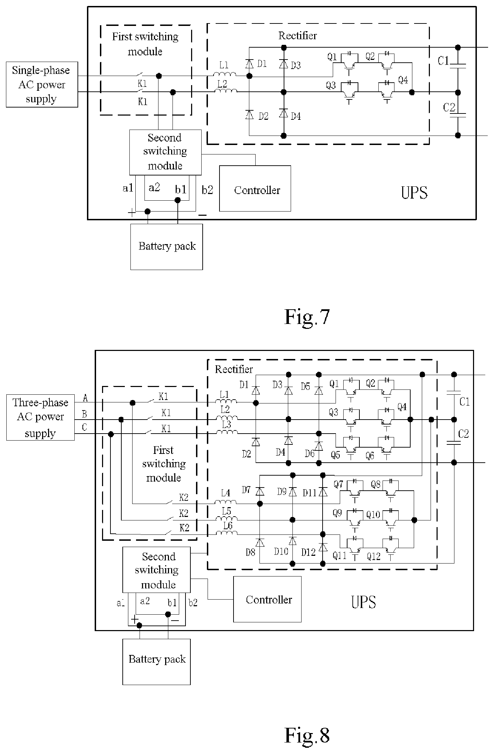

Specifically, the first switching module includes first switches K1 which correspond in one-to-one to each phase line of the AC power supply. FIG. 6 is a schematic structural diagram of a first switching module when a three-phase rectification topology as shown in FIG. 2 is adopted for a UPS. FIG. 7 is a schematic structural diagram of a first switching module when a single-phase rectification topology as shown in FIG. 4 is adopted for a UPS.

It should be noted that, in the schematic diagrams of internal device connections of the UPSs shown in FIG. 6 and FIG. 7, a battery pack is arranged outside the UPS. In practical applications, the battery pack may be arranged within the UPS.

In an example, to control each single-phase rectification bridge arm, as shown in FIG. 8, a first switching module may further include second switches K2 which correspond in one-to-one to each phase line. Three first switches may be connected respectively to inductors L1 to L3, and three second switches may be connected respectively to inductors L4 to L6, thereby controlling electrical connections between each single-phase rectification bridge arm and an AC power supply.

In practical applications, the first switches K1 and the second switches K2 may be implemented by electrically controllable switching devices commonly used in the industry. Since the UPS mostly relies on an external AC power supply, the first switches K1 according to the present disclosure may be preferably implemented by a relay or a contactor. To facilitate understanding of the technical solution claimed in the present disclosure, the structure of the second switching module shown in FIG. 7 is described below as an example.

### 2. Second switching module

A second switching module may be provided with a first end, a second end, and a third end. Two terminals a1 and a2 of the first end of the second switching module are configured to respectively connect to a positive electrode and a negative electrode of a battery pack. Two terminals b1 and b2 of the second end of the second switching module are configured to respectively connect to the negative electrode and the positive electrode of the battery pack. The third end of the second switching module is connected to an input end of a rectifier.

In practical applications, in the application scenarios of the UPS according to an example of the present disclosure, an input end of a rectification circuit may be configured with various numbers of terminals. Referring to FIG. 4, when the UPS according to an example of the present disclosure applies to a scenario where a single-phase AC power supply is adopted for power supply. The input end of the rectifier is configured with two terminals. The two terminals of the third end of the second switching module are connected correspondingly to the two terminals of the input end of the rectifier. Referring to FIG. 1 to FIG. 3, when the UPS according to an example of the present disclosure applies to a scenario where a three-phase AC power supply is adopted for power supply. The rectifier is a three-phase rectifier, and the input end of the three-phase rectifier may be configured with three terminals or six terminals. For example, in a case that the three-phase AC power supply adopts three-phase three-wire transmission, the input end of the rectifier is configured with three terminals or six terminals for receiving three-phase AC current; in a case that the three-phase AC power supply adopts three-phase four-wire transmission, the input end of the rectifier is configured with three terminals or six terminals for receiving three-phase AC current, and the rectifier further includes a terminal configured to connect to a neutral line. In a case that the UPS is configured with the rectifier structure shown in FIG. 1, the third end of the second switching module may be configured with two terminals and the two terminals may be connected to any two terminals of the three terminals for receiving three-phase AC current. In a case that the UPS is configured with the three-phase rectifier structure shown in FIG. 2 or FIG. 3, the two terminals corresponding to the single-phase rectifier bridge arms connected to each phase line transmitting three-phase AC power as the first and second terminals is taken as an example. In this case, the rectifier is configured with three first terminals and three second terminals for receiving electric energy. Thus, the third end of the second switching module is required to be configured with six terminals for respectively connecting with the three first terminals and the three second terminals.

In practical applications, the second switching module may be implemented in multiple circuit topologies, which depends on the types of switching devices in the second switching module. To facilitate understanding, an example of the second switching module is described below.

### Example 1:

The second switching module includes a first switching circuit and a second switching circuit. A first terminal of the first switching circuit is configured to connect to a positive electrode of a battery pack, a second terminal of the first switching circuit is configured to connect to a negative electrode of the battery pack, and a third terminal of the first switching circuit is configured to connect to an input end of a rectifier. A first terminal of the second switching circuit is configured to connect to the negative electrode of the battery pack, a second terminal of the second switching circuit is configured to connect to the positive electrode of the battery pack, and a third terminal of the second switching circuit is configured to connect to the input end of the rectifier.

In practical applications, an electrical connection between the first end and the third end of the second switching module can be controlled by controlling turning on and off of the first switching circuit. An electrical connection between the second end and the third end of the second switching module can be controlled by controlling turning on and off of the second switching circuit.

The first switching circuit and the second switching circuit may be implemented by conventional switching devices. The first switching circuit includes at least one second switch and at least one third switch, and the second switching circuit includes at least one fourth switch and at least one fifth switch. In a case that the rectifier is a single-phase rectifier or a three-phase rectifier and the second switching module is connected to two terminals of the input end of the rectifier, the second switching module is connected to two terminals of the rectifier. In this case, the first switching circuit may include one second switch K2 and one third switch K3, and the second switching circuit may include one fourth switch K4 and one fifth switch K5.

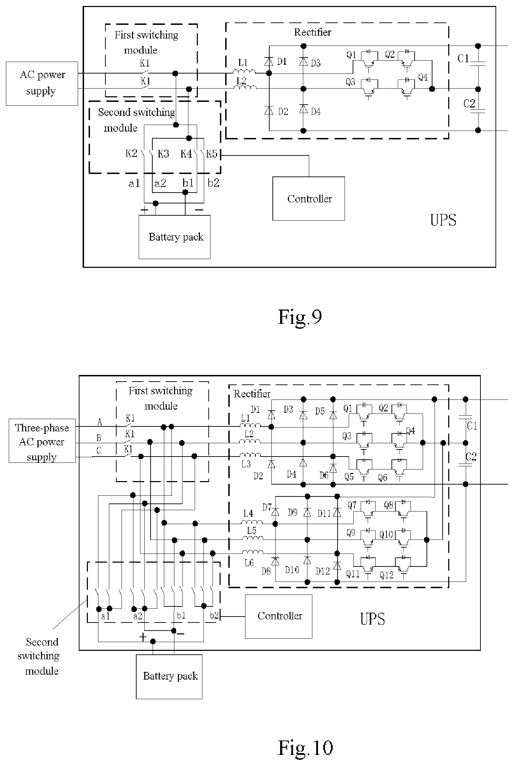

Specifically, as shown in FIG. 9, a first terminal of the second switch K2 serves as the terminal a1 of the first end of the second switching module and is configured to connect to the positive electrode of the battery pack, and a second terminal of the second switch K2 is connected to the input end of the rectifier. A first terminal of the third switch K3 serves as the terminal a2 of the first end of the second switching module and is configured to connect to the negative electrode of the battery pack, and a second terminal of the third switch K3 is connected to the input end of the rectifier. A first terminal of the fourth switch K4 serves as the terminal b1 of the second end of the second switching module and is configured to connect to the negative electrode of the battery pack, and a second terminal of the fourth switch K4 is connected to the second terminal of the second switch K2. A first terminal of the fifth switch K5 serves as the terminal b2 of the second end of the second switching module and is configured to connect to the positive electrode of the battery pack, and a second terminal of the fifth switch K5 is connected to the second terminal of the third switch K3.

It should be noted that the configuration of the second switching module shown in FIG. 9 may be applied to scenarios where the UPS is connected to a single-phase AC power supply, as well as to scenarios where the UPS is a three-phase AC power supply, and may be connected to two bridge arms in the three-phase rectifier shown in FIG. 1.

Continuing to refer to FIG. 9, upon detecting by the controller that the single-phase AC power supply or the three-phase AC power supply fails, the controller may control to alternately turn on the second and third switches K2 and K3, and the fourth and fifth switches K4 and K5, so that the battery pack supplies power to the rectifier. The battery pack-powered process may include an energy storage stage and a power supply stage. In an example in which the second switch K2 and the third switch K3 are firstly controlled to turn on, in the energy storage stage, the second switch K2 and the third switch K3 are controlled to turn on and the switching transistors Q1 to Q4 in the rectifier are controlled to turn on. At this time, electric energy is outputted from the positive electrode of the battery pack, sequentially through the second switch K2, the inductor L1, the switching transistors Q1 to Q4, the inductor L2, and the third switch K3, and back to the negative electrode of the battery pack. During a period of time when the switching transistors Q1 to Q4 are on, the inductors L1 and L2 store electric energy transmitted from the battery pack. After energy storage by the inductors L1 and L2 is completed, it switches from the energy storage stage to the power supply stage. At this time, the switching transistors Q1 to Q4 are controlled to turn off. Electric energy is outputted from the positive electrode of the battery pack, sequentially through the second switch K2, the inductor L1, the diode D1, the bus capacitor C1, the bus capacitor C2, the diode D4, the inductor L2, and the third switch K3, and back to the negative electrode of the battery pack. The electric energy of the battery pack and the electric energy stored by the inductors L1 and L2 are added and then supplied to the rectifier, so that an amplitude of a voltage output to the rectifier is higher than a rated voltage of the battery pack, thereby achieving boosting operation.

Continuing to referring to FIG. 9, after the second switch K2 and the third switch K3 are on for a period of time, the fourth switch K4 and the fifth switch K5 are controlled to turn on and the second switch K2 and the third switch K3 are controlled to turn off. In the energy storage stage, the switching transistors Q1 to Q4 in the rectifier are controlled to turn on. At this time, electric energy is outputted from the positive electrode of the battery pack, sequentially through the fifth switch K5, the inductor L2, the switching transistors Q1 to Q4, the inductor L1, and the fourth switch K4, and back to the negative electrode of the battery pack. During the period of time when the switching transistors Q1 to Q4 are on, the inductors L1 and L2 store electric energy transmitted from the battery pack. After energy storage by the inductors L1 and L2 is completed, it switches from the energy storage stage to the power supply stage. At this time, the switching transistors Q1 to Q4 are controlled to turn off. Electric energy is outputted from the positive electrode of the battery pack, sequentially through the fifth switch K5, the inductor L2, the diode D3, the bus capacitor C1, the bus capacitor C2, the diode D2, the inductor L1, and the fourth switch K4, and back to the negative electrode of the battery pack. After the fourth switch K4 and the fifth switch K5 are on for a period of time, the second switch K2 and the third switch K3 are sequentially controlled to turn on and the fourth switch K4 and the fifth switch K5 are controlled to turn off. In this way, the second and third switches K2 and K3, and the fourth and fifth switches K4 and K5 are alternately turned on until an external power supply of the UPS restores. In the battery pack-powered supply process, when the second switch K2 and the third switch K3 are turned on, the electric energy passes through the diodes D1 and D4; when the fourth switch K4 and the fifth switch K5 are turned on, the electric energy passes through the diodes D2 and D3. By the switch time division alternating connection manner described above, device service life reduction caused by the electric energy constantly flowing to specific devices in the battery pack-powered supply process can be prevented.

In practical applications, the period of time during which the second switch K2 and the third switch K3 are on may be the same as the period of time during which the fourth switch K4 and the fifth switch K5 are on. Based on differences between devices or installation positions of a cooling device for a UPS, the period of time during which the second switch K2 and the third switch K3 are on may be different from the period of time during which the fourth switch K4 and the fifth switch K5 are on. The period of time during which the second switch K2 and the third switch K3 are on and the period of time during which the fourth switch K4 and the fifth switch K5 may be configured based on application scenarios and device parameters of the UPS, which are not detailed in the present disclosure.

It should be noted that FIG. 9 only shows a structural topology of a second switching module in which a UPS is connected to a single-phase AC power supply. In practical applications, a circuit topology of the second switching module may vary depending on the type of an external power supply connected to the UPS and a circuit topology of the rectifier in the UPS. For example, in a case that the rectifier in the UPS is an interleaved parallel PFC circuit, an input end of the interleaved parallel PFC circuit is provided with first terminals and second terminals corresponding in one-to-one to each phase line of an AC power supply. Referring to the rectifier structures shown in FIG. 2 and FIG. 3, the inductor L1 and the inductor L4 respectively serve as the first terminal and the second terminal for transmitting phase-A AC current, the inductor L2 and the inductor L5 respectively serve as the first terminal and the second terminal for transmitting phase-B AC current, and the inductor L3 and the inductor L6 respectively serve as the first terminal and the second terminal for transmitting phase-C AC current. The first switching circuit includes second switches corresponding in one-to-one to each first terminal and third switches corresponding in one-to-one to each second terminal. The second switching circuit includes fourth switches corresponding in one-to-one to each first terminal and fifth switches corresponding in one-to-one to each second terminal.

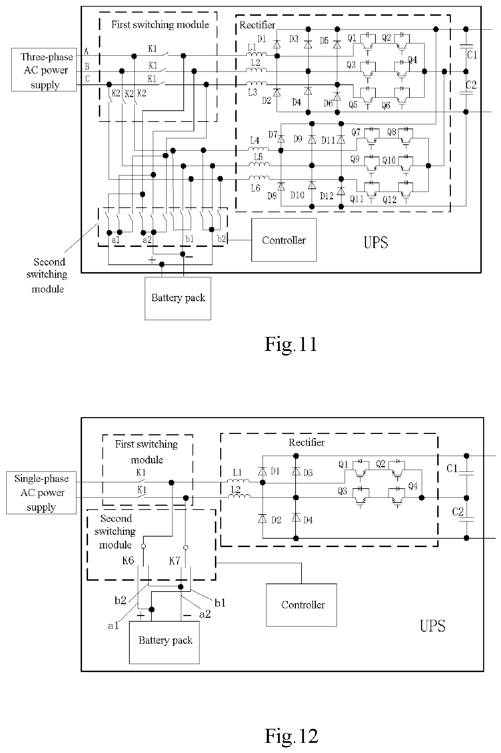

A first terminal of each second switch K2 is configured to connect to a positive electrode of a battery pack, and a second terminal of each second switch K2 is configured to connect to the corresponding first terminal. A first terminal of each third switch K3 is configured to connect to a negative electrode of the battery pack, and a second terminal of each third switch K3 is configured to connect to the corresponding second terminal. A first terminal of each fourth switch K4 is configured to connect to the negative electrode of the battery pack, and a second terminal of each fourth switch K4 is configured to connect to the corresponding first terminal. A first terminal of each fifth switch K5 is configured to connect to the positive electrode of the battery pack, and a second terminal of each fifth switch K5 is configured to connect to the corresponding second terminal. Taking the rectifier structures shown in FIG. 2 and FIG. 3 as an example, the structure of the second switching module is as shown in FIG. 10 and FIG. 11. As shown in FIG. 10 and FIG. 11, multiple switches connected to the terminal a1 are second switches, multiple switches connected to the terminal b1 are third switches, multiple switches connected to the terminal a2 are fourth switches, and multiple switches connected to the terminal b2 are fifth switches. As shown in FIG. 10, two switches are arranged on each phase line for transmitting three-phase AC current, and the two switches are connected to different electrodes of the battery pack. The current direction on a circuit may be controlled by turning on and off the switches, thereby improving the utilization of devices and preventing electric energy from constantly flowing to specific devices and generating heat. In this way, the service life of the devices can be prolonged and the energy consumption of the UPS can be reduced. The second switching module may be implemented in other structural topologies that vary depending on the rectifier topology, which is not detailed in the present disclosure.

### Example 2:

In a case that the rectifier is a single-phase rectifier or a three-phase rectifier and a second switching module is connected to two terminals of an input end of the rectifier, the second switching module may be configured with a multi-terminal switching device to reduce the number of devices and the device cost of the second switching module. For example, in the single-phase rectification topology shown in FIG. 4, referring to FIG. 12, the second switching module includes a sixth switch K6 and a seventh switch K7.

A first terminal of the sixth switch K6 serves as the terminal a1 of the first end of the second switching module and is configured to connect to a positive electrode of a battery pack. A second terminal of the sixth switch K6 serves as the terminal b2 of the second end of the second switching module and is configured to connect to a negative electrode of a battery pack. The third terminal of the sixth switch K6 is connected to one terminal of the two terminals of the rectifier to which the second switching module is connected. A first terminal of the seventh switch K7 serves as the terminal a2 of the first end of the second switching module and is configured to connect to the negative electrode of the battery pack. The second terminal of the seventh switch K7 serves as the terminal b1 of the second end of the second switching module and is configured to connect to the positive electrode of the battery pack. A third terminal of the seventh switch K7 is connected to the other terminal of two terminals of the rectifier to which the second switching module is connected.

Continuing to refer to FIG. 12, in a case that the sixth switch K6 and the seventh switch K7 are turned on by being thrown to the left, the first end and the third end of the second switching module are connected to each other. In a case that the sixth switch K6 and the seventh switch K7 are turned on by being thrown to the right, the second end and the third end of the second switching module are connected to each other. At this time, the flowing directions of electric energy in the energy storage stage and the power supply stage are the same, which is not repeated in the present disclosure.

It should be noted that the above description of the structure of the second switching module is only an example. In practical applications, the second switching module may be implemented by other devices that vary depending on the type of the AC power supply connected to the UPS and the power level of the second switching module, which is not limited in the present disclosure.

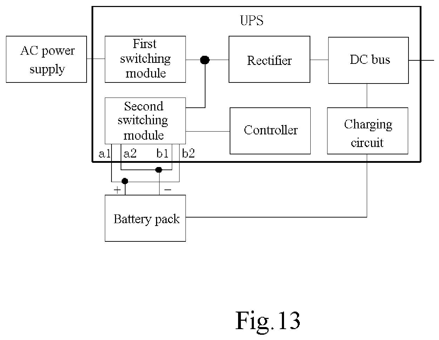

In practical applications, to ensure that a battery pack has sufficient electric energy to be supplied to a load connected to the UPS backend, referring to FIG. 13, a UPS according to an example of the present disclosure may further include a charging circuit connected between the battery pack and a DC bus. The charging circuit is configured to acquire electric energy from the DC bus to charge the battery pack.

In conjunction with the above description, a power supply device is further provided according to an example of the present disclosure. The power supply includes at least one UPS described above.

In practical applications, the power supply device, when applied in a high-power supply scenario, may include multiple UPSs connected in parallel. Each of the multiple UPSs may receive and process a part of the power, thereby improving the power supply level of the power supply device.

In the examples of the present disclosure, unless otherwise explicitly stated or logically conflicting, the terms and/or descriptions between different examples are consistent and may refer to each other. Technical features in different examples may be combined based on their inherent logical relationships to form new examples.

The following clauses are described herein:
1. An uninterruptible power supply (UPS), characterized in that the UPS comprises a first switching module, a rectifier, a second switching module, a direct-current (DC) bus, and a controller, wherein
   a first end of the first switching module is configured to connect to an alternating-current (AC) power supply, and a second end of the first switching module is configured to connect to an input end of the rectifier;
   two terminals (a1, a2) at a first end of the second switching module are configured to connect to a positive electrode and a negative electrode of a battery pack, respectively; two terminals (b1, b2) at a second end of the second switching module are configured to connect to the negative electrode and the positive electrode of the battery pack, respectively; and a third end of the second switching module is configured to connect to the input end of the rectifier;
   an output end of the rectifier is configured to connect to the DC bus; and
   the controller is configured to connect to the second switching module and is configured to: control a connection between the first end and the third end of the second switching module, or a connection between the second end and the third end of the second switching module.
2. The UPS according to clause 1, characterized in that the first switching module comprises a first switch corresponding in one-to-one to each phase line of the AC power supply.
3. The UPS according to clause 1 or 2, characterized in that the second switching module comprises a first switching circuit and a second switching circuit;
   a first terminal of the first switching circuit is configured to connect to the positive electrode of the battery pack, a second terminal of the first switching circuit is configured to connect to the negative electrode of the battery pack, and a third terminal of the first switching circuit is configured to connect to the input end of the rectifier; and
   a first terminal of the second switching circuit is configured to connect to the negative electrode of the battery pack, a second terminal of the second switching circuit is configured to connect to the positive electrode of the battery pack, and a third terminal of the second switching circuit is configured to connect to the input end of the rectifier, wherein
   the first terminal and the second terminal of the first switching circuit are configured as the first end of the second switching module, the first terminal and the second terminal of the second switching circuit are configured as the second end of the second switching module, and the third terminal of the first switching circuit and the third terminal of the second switching circuit are configured as the third end of the second switching module.
4. The UPS according to clause 3, characterized in that in a case that the rectifier is an interleaved parallel Power Factor Correction (PFC) circuit, an input end of the interleaved parallel PFC circuit is provided with first terminals and second terminals which respectively correspond in one-to-one to each phase line of the AC power supply, each of the first terminals and each of the second terminals are connected to the third end of the second switching module, the first switching circuit comprises second switches corresponding in one-to-one to each of the first terminals and third switches corresponding in one-to-one to each of the second terminals, and the second switching circuit comprises fourth switches corresponding in one-to-one to each of the first terminals and fifth switches corresponding in one-to-one to each of the second terminals;
   a first terminal of each of the second switches is configured to connect to the positive electrode of the battery pack, and a second terminal of each of the second switches is configured to connect to the corresponding first terminal;
   a first terminal of each of the third switches is configured to connect to the negative electrode of the battery pack, and a second terminal of each of the third switches is configured to connect to the corresponding second terminal;
   a first terminal of each of the fourth switches is configured to connect to the negative electrode of the battery pack, and a second terminal of each of the fourth switches is configured to connect to the corresponding first terminal;
   a first terminal of each of the fifth switches is configured to connect to the positive electrode of the battery pack, and a second terminal of each of the fifth switches is configured to connect to the corresponding second terminal.
5. The UPS according to clause 3, characterized in that, in a case that the rectifier is a single-phase rectifier or a three-phase rectifier and the second switching module is connected to two terminals at the input end of the rectifier, the first switching circuit comprises a second switch and a third switch and the second switching circuit comprises a fourth switch and a fifth switch;
   a first terminal of the second switch is configured to connect to the positive electrode of the battery pack, and a second terminal of the second switch is configured to connect to the input end of the rectifier;
   a first terminal of the third switch is configured to connect to the negative electrode of the battery pack, and a second terminal of the third switch is configured to connect to the input end of the rectifier;
   a first terminal of the fourth switch is configured to connect to the negative electrode of the battery pack, and a second terminal of the fourth switch is configured to connect to the second terminal of the second switch; and
   a first terminal of the fifth switch is configured to connect to the positive electrode of the battery pack, and a second terminal of the fifth switch is configured to connect to the second terminal of the third switch.
6. The UPS according to clause 3, characterized in that, in a case that the rectifier is a single-phase rectifier or a three-phase rectifier and the second switching module is connected to two terminals at the input end of the rectifier, the second switching module comprises a sixth switch and a seventh switch;
   a first terminal of the sixth switch is configured to connect to the positive electrode of the battery pack, a second terminal of the sixth switch is configured to connect to the negative electrode of the battery pack, and a third terminal of the sixth switch is configured to connect to one terminal of the two terminals of the rectifier to which the second switching module is connected; and
   a first terminal of the seventh switch is configured to connect to the negative electrode of the battery pack, a second terminal of the seventh switch is configured to connect to the positive electrode of the battery pack, and a third terminal of the seventh switch is configured to connect to the other terminal of the two terminals of the rectifier to which the second switching module is connected.
7. The UPS according to clause 1, characterized in that the controller is configured to: control to alternately connect the third end of the second switching module to the first end and the second end of the second switching module in a case that the AC power supply fails.
8. The UPS according to any one of the clauses 1 to 7, characterized in that the UPS further comprises a charging circuit connected between the battery pack and the DC bus, and the charging circuit is configured to acquire electric energy from the DC bus to charge the battery pack.
9. The UPS according to any one of the clauses 1 to 8, characterized in that the UPS further comprises the battery pack.
10. A power supply system, characterized in that the power supply system comprises at least one UPS according to any one of clauses 1 to 9.
11. The power supply system according to claim 10, characterized in that the power supply system comprises a plurality of UPSs which are connected in parallel

Apparently, those skilled in the art may make various modifications and variations to the present disclosure without departing from the protection scope of the present disclosure. If the modifications and variations to the present disclosure fall within the scope of the claims and equivalent technologies thereof, then the present application also intends to include these modifications and variations.

## Claims

1. An uninterruptible power supply (UPS), wherein the UPS comprises a first switching module, a rectifier, a second switching module, a direct-current (DC) bus, and a controller, wherein
a first end of the first switching module is configured to connect to an alternating-current (AC) power supply, and a second end of the first switching module is configured to connect to an input end of the rectifier;
two terminals (a1, a2) at a first end of the second switching module are configured to connect to a positive electrode and a negative electrode of a battery pack, respectively; two terminals (b1, b2) at a second end of the second switching module are configured to connect to the negative electrode and the positive electrode of the battery pack, respectively; and a third end of the second switching module is configured to connect to the input end of the rectifier;
an output end of the rectifier is configured to connect to the DC bus; and
the controller is configured to connect to the second switching module and is configured to: control a connection between the first end and the third end of the second switching module, or a connection between the second end and the third end of the second switching module.

2. The UPS according to claim 1,
wherein the first switching module comprises a first switch corresponding in one-to-one to each phase line of the AC power supply.

3. The UPS according to any one of the preceding claims,
wherein the second switching module comprises a first switching circuit and a second switching circuit;
a first terminal of the first switching circuit is configured to connect to the positive electrode of the battery pack, a second terminal of the first switching circuit is configured to connect to the negative electrode of the battery pack, and a third terminal of the first switching circuit is configured to connect to the input end of the rectifier; and
a first terminal of the second switching circuit is configured to connect to the negative electrode of the battery pack, a second terminal of the second switching circuit is configured to connect to the positive electrode of the battery pack, and a third terminal of the second switching circuit is configured to connect to the input end of the rectifier, wherein
the first terminal and the second terminal of the first switching circuit are configured as the first end of the second switching module, the first terminal and the second terminal of the second switching circuit are configured as the second end of the second switching module, and the third terminal of the first switching circuit and the third terminal of the second switching circuit are configured as the third end of the second switching module.

4. The UPS according to any one of the preceding claims,
wherein when the rectifier is an interleaved parallel Power Factor Correction (PFC) circuit, an input end of the interleaved parallel PFC circuit is provided with first terminals and second terminals which respectively correspond in one-to-one to each phase line of the AC power supply, each of the first terminals and each of the second terminals are connected to the third end of the second switching module, the first switching circuit comprises second switches corresponding in one-to-one to each of the first terminals and third switches corresponding in one-to-one to each of the second terminals, and the second switching circuit comprises fourth switches corresponding in one-to-one to each of the first terminals and fifth switches corresponding in one-to-one to each of the second terminals;
a first terminal of each of the second switches is configured to connect to the positive electrode of the battery pack, and a second terminal of each of the second switches is configured to connect to the corresponding first terminal;
a first terminal of each of the third switches is configured to connect to the negative electrode of the battery pack, and a second terminal of each of the third switches is configured to connect to the corresponding second terminal;
a first terminal of each of the fourth switches is configured to connect to the negative electrode of the battery pack, and a second terminal of each of the fourth switches is configured to connect to the corresponding first terminal;
a first terminal of each of the fifth switches is configured to connect to the positive electrode of the battery pack, and a second terminal of each of the fifth switches is configured to connect to the corresponding second terminal.

5. The UPS according to claim 3,
wherein when the rectifier is a single-phase rectifier or a three-phase rectifier and the second switching module is connected to two terminals at the input end of the rectifier, the first switching circuit comprises a second switch and a third switch and the second switching circuit comprises a fourth switch and a fifth switch;
a first terminal of the second switch is configured to connect to the positive electrode of the battery pack, and a second terminal of the second switch is configured to connect to the input end of the rectifier;
a first terminal of the third switch is configured to connect to the negative electrode of the battery pack, and a second terminal of the third switch is configured to connect to the input end of the rectifier;
a first terminal of the fourth switch is configured to connect to the negative electrode of the battery pack, and a second terminal of the fourth switch is configured to connect to the second terminal of the second switch; and
a first terminal of the fifth switch is configured to connect to the positive electrode of the battery pack, and a second terminal of the fifth switch is configured to connect to the second terminal of the third switch.

6. The UPS according to claim 3,
wherein when the rectifier is a single-phase rectifier or a three-phase rectifier and the second switching module is connected to two terminals at the input end of the rectifier, the second switching module comprises a sixth switch and a seventh switch;
a first terminal of the sixth switch is configured to connect to the positive electrode of the battery pack, a second terminal of the sixth switch is configured to connect to the negative electrode of the battery pack, and a third terminal of the sixth switch is configured to connect to one terminal of the two terminals of the rectifier to which the second switching module is connected; and
a first terminal of the seventh switch is configured to connect to the negative electrode of the battery pack, a second terminal of the seventh switch is configured to connect to the positive electrode of the battery pack, and a third terminal of the seventh switch is configured to connect to the other terminal of the two terminals of the rectifier to which the second switching module is connected.

7. The UPS according to any one of the preceding claims,
wherein the controller is configured to: control to alternately connect the third end of the second switching module to the first end and the second end of the second switching module in a case that the AC power supply fails.

8. The UPS according to any one of the preceding claims,
wherein the UPS further comprises a charging circuit connected between the battery pack and the DC bus, and the charging circuit is configured to acquire electric energy from the DC bus to charge the battery pack.

9. The UPS according to any one of the preceding claims,
wherein the UPS further comprises the battery pack.

10. A power supply system, wherein the power supply system comprises at least one UPS according to any one of claims 1 to 9.

11. The power supply system according to claim 10, wherein the power supply system comprises a plurality of UPSs according to any one of claims 1 to 9, wherein the UPSs are connected in parallel.

## Amended claims

### Amended claims in accordance with Rule 137(2) EPC.

1. An uninterruptible power supply (UPS), wherein the UPS comprises a first switching module, a rectifier, a second switching module, a direct-current (DC) bus, and a controller, wherein
a first end of the first switching module is configured to connect to an alternating-current (AC) power supply, and a second end of the first switching module is configured to connect to an input end of the rectifier;
two terminals (a1, a2) at a first end of the second switching module are configured to connect to a positive electrode and a negative electrode of a battery pack, respectively; two terminals (b1, b2) at a second end of the second switching module are configured to connect to the negative electrode and the positive electrode of the battery pack, respectively; and a third end of the second switching module is configured to connect to the input end of the rectifier;
an output end of the rectifier is configured to connect to the DC bus; and
the controller is configured to connect to the second switching module and is configured to: control a connection between the first end and the third end of the second switching module, or a connection between the second end and the third end of the second switching module;
wherein the UPS further comprises a charging circuit connected between the battery pack and the DC bus, and the charging circuit is configured to acquire electric energy from the DC bus to charge the battery pack.

2. The UPS according to claim 1,
wherein the first switching module comprises a first switch corresponding in one-to-one to each phase line of the AC power supply.

3. The UPS according to any one of the preceding claims,
wherein the second switching module comprises a first switching circuit and a second switching circuit;
a first terminal of the first switching circuit is configured to connect to the positive electrode of the battery pack, a second terminal of the first switching circuit is configured to connect to the negative electrode of the battery pack, and a third terminal of the first switching circuit is configured to connect to the input end of the rectifier; and
a first terminal of the second switching circuit is configured to connect to the negative electrode of the battery pack, a second terminal of the second switching circuit is configured to connect to the positive electrode of the battery pack, and a third terminal of the second switching circuit is configured to connect to the input end of the rectifier, wherein
the first terminal and the second terminal of the first switching circuit are configured as the first end of the second switching module, the first terminal and the second terminal of the second switching circuit are configured as the second end of the second switching module, and the third terminal of the first switching circuit and the third terminal of the second switching circuit are configured as the third end of the second switching module.

4. The UPS according to any one of the preceding claims,
wherein when the rectifier is an interleaved parallel Power Factor Correction (PFC) circuit, an input end of the interleaved parallel PFC circuit is provided with first terminals and second terminals which respectively correspond in one-to-one to each phase line of the AC power supply, each of the first terminals and each of the second terminals are connected to the third end of the second switching module, the first switching circuit comprises second switches corresponding in one-to-one to each of the first terminals and third switches corresponding in one-to-one to each of the second terminals, and the second switching circuit comprises fourth switches corresponding in one-to-one to each of the first terminals and fifth switches corresponding in one-to-one to each of the second terminals;
a first terminal of each of the second switches is configured to connect to the positive electrode of the battery pack, and a second terminal of each of the second switches is configured to connect to the corresponding first terminal;
a first terminal of each of the third switches is configured to connect to the negative electrode of the battery pack, and a second terminal of each of the third switches is configured to connect to the corresponding second terminal;
a first terminal of each of the fourth switches is configured to connect to the negative electrode of the battery pack, and a second terminal of each of the fourth switches is configured to connect to the corresponding first terminal;
a first terminal of each of the fifth switches is configured to connect to the positive electrode of the battery pack, and a second terminal of each of the fifth switches is configured to connect to the corresponding second terminal.

5. The UPS according to claim 3,
wherein when the rectifier is a single-phase rectifier or a three-phase rectifier and the second switching module is connected to two terminals at the input end of the rectifier, the first switching circuit comprises a second switch and a third switch and the second switching circuit comprises a fourth switch and a fifth switch;
a first terminal of the second switch is configured to connect to the positive electrode of the battery pack, and a second terminal of the second switch is configured to connect to the input end of the rectifier;
a first terminal of the third switch is configured to connect to the negative electrode of the battery pack, and a second terminal of the third switch is configured to connect to the input end of the rectifier;
a first terminal of the fourth switch is configured to connect to the negative electrode of the battery pack, and a second terminal of the fourth switch is configured to connect to the second terminal of the second switch; and
a first terminal of the fifth switch is configured to connect to the positive electrode of the battery pack, and a second terminal of the fifth switch is configured to connect to the second terminal of the third switch.

6. The UPS according to claim 3,
wherein when the rectifier is a single-phase rectifier or a three-phase rectifier and the second switching module is connected to two terminals at the input end of the rectifier, the second switching module comprises a sixth switch and a seventh switch;
a first terminal of the sixth switch is configured to connect to the positive electrode of the battery pack, a second terminal of the sixth switch is configured to connect to the negative electrode of the battery pack, and a third terminal of the sixth switch is configured to connect to one terminal of the two terminals of the rectifier to which the second switching module is connected; and
a first terminal of the seventh switch is configured to connect to the negative electrode of the battery pack, a second terminal of the seventh switch is configured to connect to the positive electrode of the battery pack, and a third terminal of the seventh switch is configured to connect to the other terminal of the two terminals of the rectifier to which the second switching module is connected.

7. The UPS according to any one of the preceding claims,
wherein the controller is configured to: control to alternately connect the third end of the second switching module to the first end and the second end of the second switching module in a case that the AC power supply fails.

8. The UPS according to any one of the preceding claims,
wherein the UPS further comprises the battery pack.

9. A power supply system, wherein the power supply system comprises at least one UPS according to any one of claims 1 to 8.

10. The power supply system according to claim 9, wherein the power supply system comprises a plurality of UPSs according to any one of claims 1 to 8, wherein the UPSs are connected in parallel.
